(19)

**Europäisches Patentamt**
**European Patent Office**
**Office européen des brevets**

(11) **EP 1 835 371 A1**

(12) **EUROPEAN PATENT APPLICATION**

(43) Date of publication:
**19.09.2007 Bulletin 2007/38**

(51) Int Cl.:
**G05D 23/19** *(2006.01)*

(21) Application number: **07005448.1**

(22) Date of filing: **16.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **17.03.2006 IT MO20060088**

(71) Applicant: **ANGELO PO GRANDI CUCINE S.p.A.**
**41012 Carpi (MO) (IT)**

(72) Inventor: **Segato, Fabio**
**41058 Vignola (MO) (IT)**

(74) Representative: **Crugnola, Pietro**
**Luppi Crugnola & Partners S.r.l.**
**Viale Corassori 54**
**41100 Modena (IT)**

(54) **Method and apparatus for cooking food products**

(57)     The invention relates to a method and an apparatus for cooking food products, the method comprises: detecting, at set time intervals $(\tau_i)$, a cooking variable $(T_i)$ that represents a degree of cooking of the food product, storing the detected variables in a calculating unit $(\tau_i, T_i)$, using an interpolation equation with two parameters $(T_e, A)$ for interpolating the trend of the cooking variable with respect to time, determining, at preset time intervals $(\tau_i)$, optimum values of the at least two parameters $(T_e, A)$ so as to optimise interpolation on at least part of the detected variables $(\tau_i, T_i)$, using the two parameters $(T_e, A)$ determined in the preceding step to extrapolate the trend of the cooking parameter $(T_{i+1}, ..., T_{i+m})$ in the time intervals $(\tau_{i+1}, ..., \tau_{i+m})$ following the values detected in the last time intervals $(\tau_{i-n}, \tau_{i-n+1},..., \tau_i)$, to determine optimum values of the two parameters $(T_e, A)$ the interpolation error is minimised on two or more sets of acquired values relating to different instants of time; the apparatus enables the method according to the invention to be achieved.

Fig. 6

**EP 1 835 371 A1**

**Description**

The invention relates to a method for cooking food products and the corresponding apparatus for carrying out the method.

In order to cook food products in cooking apparatuses or ovens a method based on empirical parameters is often followed: for the various types of food products to be cooked, the time, the temperature and possible temperature variation over the course of the cooking steps are established on the basis of previous tests and experiences acquired directly by the person who is engaged in the cooking or as disclosed in cookery books and similar publications. This method has great uncertainty in terms of obtaining optimal cooking due to the numerous variables at play, and cooking errors are always possible that are unacceptable, especially for the professional sector.

Thus, for the professional sector, cooking apparatuses or ovens have been invented that can perform cooking according to preset programmes and which are stored in an electronic controlling device of the oven.

These cooking programmes consist of a variable number of successive cooking steps, each of which comprises various cooking parameters: cooking with dry air, with steam or with a combination of air and steam, temperature of the cooking chamber, humidity percentage, etc..

The duration of each step is normally defined in two different ways: by directly defining a time at the expiry of which there is a passage to the successive step, or by defining an objective value for a cooking parameter (normally a temperature inside the food product) and comparing it with a value measured on the food product (for example through a temperature sensor that detects the temperature inside the food product being cooked).

When the value of the measured cooking parameter reaches the set value, the current cooking step is terminated, regardless of the duration thereof, and the programme moves on to the successive cooking step.

Cooking cases exist where it is appropriate, especially in the final cooking steps, to use steps of preset duration, but at the same time a preset value has to be reached for the cooking parameter, generally a temperature inside the food product.

For example, when cooking a roast it is important to reach at the end of cooking a preset temperature inside the food product in order to obtain the desired degree of cooking (rare, medium, well done, etc.).

At the same time, it is appropriate to finish cooking with a cooking step with high-temperature dry air to obtain surface browning of the meat. The duration of this last step determines the degree of browning obtained.

In order to obtain simultaneously the desired degree of internal cooking and the desired degree of external browning, it is necessary to combine the duration of the last browning step with the reaching of the desired temperature value inside the food product.

With a traditional oven, the last browning step (the duration of which is established on the basis of the level of browning desired) is started when a set internal temperature is reached that is lower than the final desired value by a certain amount.

This simple method works only for a set combination of type of food product, size or for a set quantity of food product introduced into the oven.

In fact, if one of these parameters changes, the variation of the temperature inside the food product during the browning step is modified. For example, the internal temperature increases faster in the case of meat of smaller size, and therefore also the temperature has to be changed at which this last browning step starts.

Thus a certain variability of results remains, and, also in this case, the need remains to refer to cooking parameters found in an empirical manner on the basis of the experience of the person engaged in the cooking.

The prior art provides some methods and apparatuses for cooking food products.

In international patent application WO-98/48679 a cooking method is disclosed that provides for the use of at least a temporal derivative of a cooking parameter (for example the temperature inside the food product) to govern the cooking method.

During cooking, the values of the temperature inside the food product at different moments are detected and the derivative is calculated with respect to time. From the derivative it is possible to predict by how much the temperature will increase inside the food product during the final browning step, whatever the type of food product, the size thereof or other factors.

Once the final cooking temperature has been defined and the final duration of browning has been established on the basis of the desired result, it is possible to find the temperature inside the food product at which the final browning step should be started. This method is simple and easy to conduct, but in some cases may not be accurate.

In fact, if in predicting the temperature trend only the first derivative is used the temperature trend is approximated by a line with sure occurrence of non-negligible errors.

In order to improve the precision of the method against slightly complicated calculations, in addition to the first derivative, the second derivative and/or the derivative of a successive order can be used. In this way, the time-temperature trend is approximated by a parabola or a polynomial of higher degree. Nevertheless, if an attempt is made to estimate the temperature trend over periods of time that are not short (that are longer than a few minutes), there is a risk of committing even rough errors inasmuch as the actual trend of the time-temperature curve is not represented by the trend of a polynomial function.

In another patent application WO-2004/062372 a method is disclosed that provides analysing the actual temperature trend and associating it with a curve having a similar trend. This curve is selected from a series of curves stored in the control memory of the oven. Although this method overcomes the limits of the preceding one, this method is certainly more complicated and requires greater memory resources for storing the preset curves. Further, the family of stored curves is obtained by starting from the actual data of a series of cooking cycles in the oven and thus the family requires a significant amount of experimental work in order to be defined.

An object of the invention is thus to improve the systems and the methods and the known apparatuses for cooking food products.

Another object of the invention is to present a method and an apparatus for cooking food products that are simple to make.

Still another object is to present a method and an apparatus that are accurate and precise in cooking food products and that provide predictable and repeatable results.

A further object of the invention is to present a method and an apparatus that are cheap to implement and construct.

In a first aspect of the invention there is provided a method for cooking a food product in a cooking apparatus or oven, comprising: detecting, at set time intervals, a cooking variable that represents a degree of cooking of the food product, storing in a calculating unit the detected variables, using an interpolation equation having at least two parameters for interpolating the trend of the cooking variable with respect to time, determining, at preset time intervals, optimum values of the at least two parameters so as to optimise interpolation on at least part of the detected variables, using the at least two parameters determined in the preceding step to extrapolate the trend of the cooking parameter in the time intervals following the values detected in the last time intervals, characterised in that said determining optimum values of the at least two parameters is obtained by minimising the interpolation error on two or more sets of acquired values relating to different instants of time.

In a second aspect of the invention, there is provided an apparatus for cooking a food product comprising a cooking chamber suitable for containing the food product to be cooked, probe means suitable for detecting values of a variable that represents a degree of cooking of the food product, a calculating unit suitable for storing the values of the cooking variables detected at preset time intervals and suitable for extrapolating the trend of the values of the cooking variables through an interpolation equation having at least two parameters, characterised in that said calculating unit determines optimum values of the at least two parameters minimising the interpolation error on two or more sets of acquired values relating to different instants of time.

Owing to the first and the second aspect of the invention it is possible to provide in an accurate and precise manner the trend of the time-temperature curve for the food product being cooked with a simple method that enables the prior-art drawbacks disclosed previously to be eliminated.

As it is not necessary to store a great quantity of data, the calculating unit does not have to have a large memory and is cheap to make.

The invention can be better understood and implemented with reference to the attached drawings, which illustrate an embodiment thereof by way of non-limiting example, in which:

Figure 1 is a diagram that illustrates the trend of the time-temperature curve for different values of a constant "$T_e$" used in the method according to the invention;
Figure 2 is a diagram that illustrates a trend of the time-temperature curve for different values of a constant "A" used in the method according to the invention;
Figure 3 is a diagram that illustrates a time-temperature curve that is actually measured during complete cooking of a food product;
Figure 4 is a diagram that illustrates two curves during cooking of a food product, the continuous curve is the actually measured time-temperature curve, the dotted curve is calculated on the basis of the time-temperature values detected up to the instant considered for the measurement;
Figure 5 is a further extension of the curves in an instant following that in Figure 4, in which further values of the measured temperature (continuous curve) have been detected, with these values the calculation of the dotted curve obtained with the method according to the invention has been prosecuted; and
Figure 6 is a schematic block diagram that illustrates the main steps of the method according to the invention.

The method according to the invention is based on an equation that shows the heat exchange between the food product to be cooked and the zone, air, and/or steam, that surrounds the product.

Below, a general equation is disclosed, which does not refer directly to the heat-exchange theory, but is indicative of the degree of cooking of a food product.

The degree of cooking of a food product can be represented by a variable that is characteristic of the product. For example, the degree of cooking of a food product can be represented by the temperature measured in the interior thereof, or, more precisely, by the core temperature, i.e. by the temperature measured at the thermal centre thereof.

More in general, it is possible to indicate with T a variable that represents the degree of cooking of the food and that is measurable, directly or indirectly, during the cooking process, by a suitable sensor inserted into the food. In addition to the aforesaid temperature, other physical parameters such as the humidity level, resistance or electric impedance, thermal conductivity and others can be taken into consideration.

Object of the invention is to find a method that, starting from the acquired values of T during cooking, extrapolates the trend of T in the instants following the last one acquired. The proposed method uses an appropriate interpolating equation that can be written in the form:

$$T = f (\tau, P_1, P_2, ..., P_r)$$

where: $\tau$ is the time and $P_1$, $P_2$,..., $P_r$ are "r" variable parameters (with r greater or the same as two) that modify the shape of the curve $(\tau, T)$ defined by the equation.

Let it be assumed initially that said equation has only two parameters, $P_1$ and $P_2$.

The method consists of fixing a first-attempt value for one of the two parameters, for example $P_1$, and subsequently calculating through an approximation method, for example through a regression, a first value of the parameter $P_2$, which will be indicated by $P_2'$, that minimises the interpolation error between the equation $T=f(\tau, P_1, P_2)$ and a preset number of pairs of detected values $\tau_{i-n}$, $\tau_{i-n+1}$, ..., $\tau_i$; $T_{i-n}$, $T_{i-n+1}$,..., $T_i$ belonging to a first set of time-cooking parameter pairs. By repeating the same method on a second different set of pairs of time-cooking variable values $\tau_{j-n}$, $\tau_{j-n+1}$,..., $\tau_j$; $T_{j-n}$, $T_{j-n+1}$, ..., $T_j$ regarding instants of time subsequent to those previously considered, it is possible to obtain a second (new) $P_2$ value that will be indicated as $P_2''$, that minimises the interpolation error on the set of points now considered.

If the two values $P_2'$ and $P_2''$ coincide this means that the values of the parameters $P_1$ and $P_2'$ $(=P_2'')$ thus determined define a single time-cooking variable curve that is able to interpolate with good accuracy the actual trend of the cooking variable in relation to the time instants already considered. Thus this curve can be appropriately used also for extrapolating the trend of the cooking variable also for instants after the last known instant.

If, on the other hand, the values $P_2'$ and $P_2''$ differ, it means that the curve generated by $P_1$ and $P_2'$ is not able to approximate with good accuracy the trend of the cooking variable T for the subsequent instants.

The method thus has to be repeated on the same sets of values considered previously with values other than P1 until the $P_2'$ and $P_2''$ values coincide.

Usually, for cooking processes absolute precision in the interpolation of the values of the cooking variable T is not required but only a good approximation, so it is not strictly necessary for the $P_2'$ and $P_2''$ values to coincide.

An approximation error Ep can thus be defined and the values $P_2'$ and $P_2''$ can be considered to coincide when the absolute value difference thereof is less than Ep.

The parameter $P_1$ can be varied discretely, by increasing or decreasing $P_1$ by a preset quantity $\Delta P_1$ that is possibly variable according to the degree of precision required in the various cooking steps.

These approximations do not affect the validity of the proposed mathematical extrapolation method and therefore enable the number of calculations to be significantly reduced that the calculating unit has to perform.

Let the case now be considered in which the interpolating function has three variable parameters, $P_1$, $P_2$ and $P_3$. The method that has just been illustrated can be repeated in a similar manner also in this case. In detail, two first attempt values for $P_1$ and $P_2$ are fixed. Then in a similar way to what has been described in the previous case, the two values of $P_3$ (which we indicate by $P_3'$ and $P_3''$) that minimise the error on two sets of detected values, respectively $\tau_{i-n}$, $\tau_{i-n+1}$,..., $\tau_i$; $T_{i-n}$, $T_{i-n+1}$,..., $T_i$ and $\tau_{j-n}$, $\tau_{j-n+1}$,..., $\tau_j$; $T_{j-n}$, $T_{j-n+1}$,..., $T_j$ in relation to successive intervals of time. The two values $P_3'$ and $P_3''$ are compared and, even if they do not coincide the method is repeated by varying the value of $P_2$ until $P_3'$ and $P_3''$ coincide. The value of $P_2$ that is thus determined is used to determine the value of P3 (which we indicated with P3'''), which minimises the interpolation error on a third and different set of detected values $\tau_{k-n}$, $\tau_{k-n+1}$,..., $\tau_k$; $T_{k-n}$, $T_{k-n+1}$,..., $T_k$ corresponding to instants of time other than those of the two sets considered previously.

The $P_3'''$ value thereby obtained is compared with the $P_3'$ $(=P_3'')$ value obtained from the preceding optimisation process. If the two values coincide, this means that the three values thereby obtained for the parameters $P_1$, $P_2$ and $P_3$ are able to interpolate with the approximation desired on three sets of values relating to different periods of time and thus said values can be used in the interpolating function to extrapolate the trend of the cooking variable T also for instants of time following the last detected instant.

Vice versa, if $P_3'''$ and $P_3''$ (or $P_3'$) differ, this means that the value assumed for $P_1$ is not suitable for obtaining a good interpolation on the three sets of considered values. The entire process is thus repeated with values other than $P_1$ until $P_3'$, $P_3''$ and $P_3'''$ coincide (or differ less than the maximum approximation error Ep).

It is possible to proceed in a similar manner also when the interpolating function has more than three parameters, considering also a greater number of sets of values (always referring to periods of time that are different from one another).

Obviously, when the number of parameters of the equation is greater than two the method is complicated and requires an ever greater number of mathematical calculations, entailing an ever greater calculation capacity of the control unit and/or ever longer calculation time.

On the other hand, the improvement in the precision of the interpolation of the cooking variable T may not be so high as to justify a complication of the mathematical calculation.

In fact, experience shows that an already very satisfying level of precision can be reached using suitable equations (like the one an example of which will be given below) with merely two parameters thereof.

A type of equation that uses as a cooking variable T the temperature measured inside the food, and more precisely the core temperature T (i.e. the temperature at the thermal centre of the product to be cooked) is the one proposed below.

This equation derives directly from the relations that represent the heat exchange between the product to be cooked and the zone, air and/or steam, that surrounds the product.

In fact, from a theoretical point of view, cooking a food product is similar to a heat exchange in a non-stationary regime where the initial temperature of the affected body (the food product to be cooked) is constant and where at the zero instant (corresponding to the start of cooking, or to the introduction of the cold food product into the pre-heated oven) the temperature of the air that laps the body is set at a temperature that is equal to a set value (the temperature inside the cooking chamber).

This heat exchange can thus be represented mathematically by a differential equation known as Fourier's Law.

In most actual cases the differential equation of Fourier is not directly solvable, i.e. it is not possible to determine an equation that represents the temperature trend inside the body in function of time. In order for the equation of Fourier to give rise to a defined time-temperature equation it is normally necessary to introduce many simplifying hypotheses.

In the case in question, hypothesising that the internal resistance of the body to the heat exchange is negligible compared with the other parameters involved, presuming that all the physical features of the body are constant and uniform, the equation of Fourier gives rise to a solution of exponential type:

$$[1] \quad \theta = e \; \char94 \; (-Bi \; * \; Fo)$$

in which:

$$[2] \quad \theta = (T_e - T) \; / \; (T_e - T_o)$$

Bi is the Biot number ( $Bi = \alpha * L / \lambda$ )
Fo is the Fourier number ($Fo = a * \tau / L\char94 2$)
$\tau$ is the time
$T_e$ is the temperature outside the body
$T_o$ is the initial temperature of the body (presumed to be uniform)
T is the internal temperature measured at the instant $\tau$
$\alpha$ is the convection coefficient on the surface of the body
$\lambda$ is the thermal conductivity of the body
a is the thermal diffusivity of the body
L is a characteristic dimension of the body.

By grouping all the constant terms, or anyway the terms that can be hypothesised to be constant, into a single parameter A the preceding can be written:

$$[3] \quad \theta = e \; \char94 \; (-\tau \; / \; A)$$

$$[4] \quad \tau = - \; A \; * \; \log \; (\theta).$$

By replacing the equation [2] in the equation [3] and extrapolating the internal temperature T the following is obtained:

$$[5] \quad T = T_e - (T_e - T_o) * e \char`\^ (-\tau / A).$$

By using a temperature sensor inserted into the food product it is possible to measure in a continuous manner the temperature inside the food product, in particular the so-called core temperature, i.e. the temperature at the thermal centre thereof.

Subsequently, the core temperature of the food product will be indicated with T, rather than the temperature in a general internal point. The temperature T can be obtained with a probe, placed inside the food product, which measures the temperature directly. Alternatively, a measurement of the degree of cooking can be made using other variables, for example the electric impedance of the food product can be measured. At each moment of cooking the time elapsing from the start of cooking and the measured core temperature are known. By considering a pair of time/temperature values $\tau_i$, $T_i$ at the i-th instant, the initial core temperature To being known, i.e. the core temperature measured at the start of cooking, and setting the temperature $T_e$ as equal to the, temperature measured in the chamber, it is possible to calculate $\theta_i$ with the equation [2], it is subsequently possible to find the only incognita A, through the equation [4] .

If the parameter A is known, which summarises all the constant parameters, or supposed constants, involved in cooking, the equation [5] that links the temperature T to the time $\tau$ is completely defined.

The equation [5], with the previously calculated parameter A can then be used to extrapolate the temperature trend over time also for the subsequent instants to the considered i-th instant.

In particular, if $T_f$ indicates the core temperature that it is desired to obtain at the end of cooking, it is possible to predict the instant If at which the temperature T will be equal to $T_f$, and the time left to the end of cooking can be calculated from the difference $\tau_f - \tau_i$.

The mathematical interpolating method like the one disclosed above was not found to be sufficiently precise to extrapolate the time trend of the core temperature and to predict the time remaining to the end of cooking.

In fact, the equations indicated above represent a significantly simplified method compared with the actual one, as actually the internal thermal resistance of the food product is not negligible compared with the other parameters in question.

Further, many parameters collected in parameter A (thermal conductivity, convective exchange coefficient, etc.) are not actually constant with respect to time, or uniform within the food product to be cooked.

In order to improve the precision of the equation [5] in extrapolating the temporal trend of the core temperature T and predicting the end of cooking time, it is appropriate to neglect completely the physical meaning of the parameters $T_e$ and A and consider them to be simple mathematic parameters to be determined to "adapt" the equation [5] to the actual time-temperature trend.

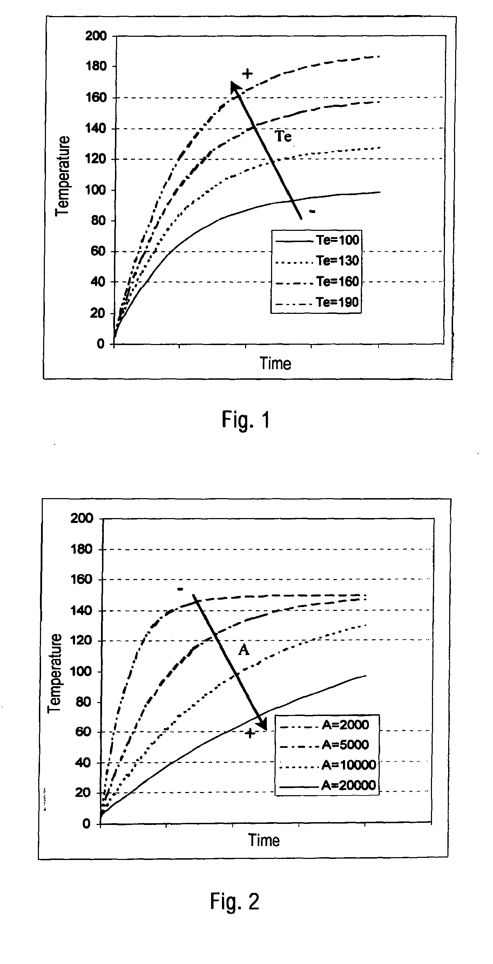

In other words, by appropriately varying the parameters $T_e$ and A in the equation [5] a family of curves (Figures 1 and 2) is obtained of a different shape that can interpolate with sufficient precision any core temperature increase of the food product to be cooked.

The trends of the time-temperature curves with the varying of the two parameters $T_e$, A are illustrated in Figures 1 and 2.

In Figure 1, there are illustrated curves of the equation [5] relating to different values of the parameter $T_e$, in particular for values 100 to 190, from which a trend of the curves results substantially similar to one another, with a rise of the curves with the increase of the value of the parameter $T_e$.

In Figure 2 there are illustrated some curves of the equation [5] relating to different values of the parameter A, in particular for values 2000 to 20000, from which there is a different trend of the curves, with a decrease and flattening of the curves as the value of the parameter A increases.

By combining the different values of the two parameters $T_e$, A it is thus possible to obtain a trend of the curve obtained by the mathematical relations that is similar to that of the actual trend.

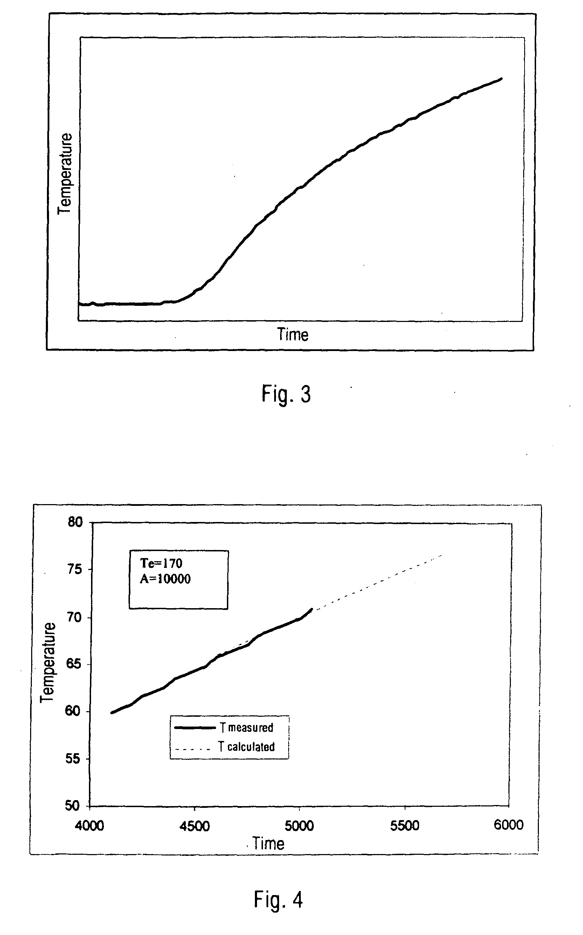

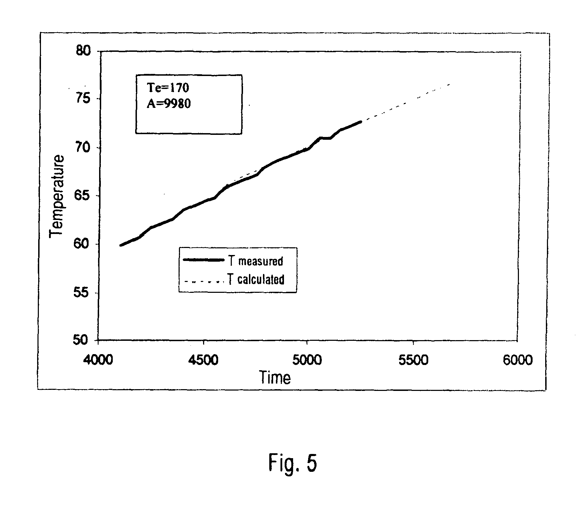

Different combinations of the two parameters $T_e$, A applied to interpolating curves, are illustrated in the examples in Figures 4 and 5.

In Figure 4 there is illustrated in a continuous line the actual temperature curve for a given food product being cooked, the dotted curve is the interpolating curve obtained from the equation [5] for the values $T_e$=170 and A=10000; in Figure 5 there is illustrated as a continuous line the actual curve of the temperature for the same food product in Figure 4, in which temperature values were detected at instants subsequent to those of Figure 4, in this case the dotted curve is the interpolating curve obtained from the equation [5] for the values of the parameters $T_e$=170 and A=9980, the new values of the parameters $T_e$ and A were obtained through the method according to the invention.

It should be known that a correct and precise interpolation of the time-temperature curve is of little interest in the initial cooking step of the food product, whilst it is much more important in the final step where it may be necessary to modify the conditions inside the cooking chamber to obtain the desired final result.

The efficacy of this approach is linked to the capacity to determine optimum values for the parameters $T_e$ and A in such a way that the equation [5] approximates in the best possible way the actual time-temperature curve of the food product being cooked.

The method for obtaining the interpolation consists of fixing a first-attempt value for $T_e$ and subsequently calculating through an approximation method, for example through a regression, a first value of the parameter A, which will be indicated with A', that minimises the interpolation error between the equation [5] and a preset number of pairs of detected time-temperature values $\tau_{i-n}$, $\tau_{i-n+1}$, ..., $\tau_i$; $T_{i-n}$, $T_{i-n+1}$,..., $T_i$ belonging to a first set of time-temperature pairs.

By repeating the same method on a second different set of pairs of time-temperature values $\tau_{j-n}$, $\tau_{j-n+1}$,..., $\tau_j$; $T_{j-n}$, $T_{j-n+1}$,..., $T_j$, relating to instants following those previously considered, it is possible to obtain a second (new) value of A, which will be indicated with A", that minimises the interpolation error on the set of points now considered.

If the two values A' and A" coincide, it means that the values of the parameters $T_e$ and A' (=A") thus determined define a single time-temperature curve that is able to interpolate with good approximation the actual temperature trend in relation to the already considered instants of time. This curve can thus be conveniently used also to extrapolate the temperature trend even for instants after the last known instant.

If on the other hand the values A' and A" differ, this means that the curve generated by $T_e$ and A' is not able to approximate with good accuracy the temperature trend for subsequent instants.

The method must therefore be repeated on the same sets of values considered before with different values of $T_e$, until the values A' and A" coincide.

Furthermore, it is possible to prove that if A" is greater than A' the value of $T_e$ has to be diminished and vice versa.

One of the methods that can be used for determining the particular value A' of the parameter A that minimises the interpolation error on a set of time-temperature values $\tau_{i-n}$, $\tau_{i-n+1}$, ..., $\tau_i$; $T_{i-n}$, $T_{i-n+1}$,..., $T_i$ is the method of squared minimums.

The method consists of fixing a first-attempt value A* for the parameter A and using said value in the equation [5] for calculating the temperature values that will be indicated by $T^*_{i-n}$, $T^*_{i-n+1}$,..., $T^*i$ corresponding to the instants of time $\tau_{i-n}$, $\tau_{i-n+1}$,..., $\tau_i$.

The values $T^*_{i-n}$, $T^*_{i-n+1}$,..., $T^*_i$ represent the temperature values obtained from the interpolating equation [5] using the value A*. On each of the considered points the interpolation error is then calculated, i.e. the difference between the value T* given by the equation [5] and the actual measured temperature T.

From these differences, the sum of the squares is then calculated, given by:

$$SQ = (T^*_{i-n} - T_{i-n})^2 + (T^*_{i-n+1} - T_{i-n+1})^2 + ... + (T^*_i - T_i)^2$$

The calculation is then repeated for different values A until the sum of the errors squares becomes minimal.

The value of A thus calculated is the value indicated by A' that minimises the interpolation error on all the time-temperature points considered.

For cooking food products, the interpolation method can be concluded when the values A' and A" are sufficiently near even if they do not coincide perfectly. An approximation error $E_A$ can then be defined and the values A' and A" can be considered coincident when the difference thereof as an absolute value is less than $E_A$.

The approximation value $E_A$ can be suitably defined in function of the desired degree of protection: by decreasing $E_A$ the decrease of precision of the temperature trend prediction is increased and vice versa.

The variation of the parameter $T_e$ can be made in a discrete manner, increasing or decreasing $T_e$ by a preset quantity $\Delta T_e$, and which may be variable in function of the desired degree of precision in the various cooking steps.

These approximations do not detract from the validity of the proposed mathematical extrapolation process and thus enable the number of calculations that the calculating unit has to make to be reduced considerably.

The calculating unit may comprise an electronic computer with data store means, for example of the type used in a personal computer.

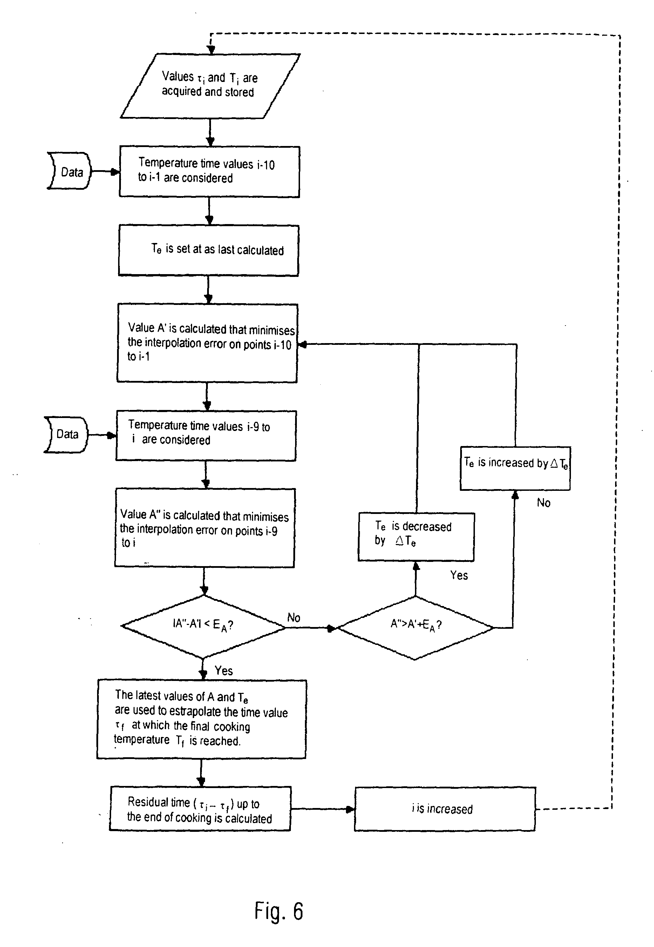

In Figure 6, there are illustrated in detail in the form of a flow diagram the main steps for carrying out the method according to the invention.

With reference to the flow diagram, for the general i-th time instants of the cooking the time values $\tau_i$ and the temperature values $T_i$ are stored.

Then with $\tau_{i-10}$, $\tau_{i-9}$,..., $\tau_i$ and with $T_{i-10}$, $T_{i-9}$....,$T_i$ the pairs of time and temperature values are recorded relating to the detection of the i-th instant and to ten preceding instants, these values being stored in the calculating unit of the apparatus.

The sets of values $\tau$ and T relating to the instants from i-10 to i-1 are initially considered.

Assuming the value $T_e$ calculating previously, or if it is the first iteration, considering for $T_e$ a preset first-attempt value, the value of A is then calculated, indicated with A', that minimises the interpolation error on the considered points.

Subsequently, the set of values from "i-9" to "i" is considered and the method is repeated with the same value of $T_e$ and calculating the value A". If the difference between A' and A" is as an absolute value less than $E_A$ the pair of values $T_e$ and A", or indifferently A', can be used to extrapolate the time-temperature curve and calculate the time instant $\tau_f$ in which it is predicted that the target temperature $T_f$ will be reached.

If on the other hand A" and A' by a quantity greater than $E_A$ the value of $T_e$ decreases or increases by an amount $\Delta T_e$ and the method is repeated until the two values A' and A" differ by a quantity less than $E_A$.

As cooking proceeds the optimal values of the parameters $T_e$ and A obtained with the aforesaid method can change inasmuch as the actual time-temperature trend may change (as illustrated, for example, in Figures 4 and 5) for varying the features of the food product, the conditions in the cooking chamber of the apparatus or varying other boundary conditions.

This does not constitute a limit to the method inasmuch as by repeating the method disclosed above at each new acquisition of the time-temperature values $\tau$ and T the values of $T_e$ and A adapt automatically to the changed conditions of the current method.

With respect to the embodiments of known type with the method according to the invention it is possible to predict in an accurate and precise manner the trend of the time-temperature curve for the food product being cooked.

It is not necessary to make long and costly experiments on food products being cooked, because the method according to the invention is based on a limited number of measurements made directly on the food product that is located in the cooking apparatus and does not require the use of curves obtained experimentally and stored in the calculating unit.

It is not therefore necessary to have a control device of the cooking apparatus provided with a calculating unit with a large memory, and also the calculating capacity of the calculating unit can be limited because the method is based on simple equations and simple calculations.

It also follows that the cooking apparatus is cheap and simple to make, is reliable and is easy to maintain.

**Claims**

1. Method for cooking a food product in a cooking apparatus or oven, comprising:

   detecting, at set time intervals ($\tau_i$), a cooking variable ($T_i$) that represents a degree of cooking of the food product, storing the detected variables in a calculating unit ($\tau_i$, $T_i$), using an interpolation equation, having at least two parameters ($T_e$, A), for interpolating the trend of the cooking variable (T) with respect to time ($\tau$), determining at preset time intervals ($\tau_i$), optimum values of the at least two parameters ($T_e$, A) so as to optimise interpolation on at least part of the detected variables ($\tau_i$, $T_i$), using the at least two parameters ($T_e$, A) determined in the preceding step to extrapolate the trend of the cooking parameter ($T_{i+1}$, ..., $T_{i+m}$) in the time intervals ($\tau_{i+1}$, ..., $\tau_{i+m}$) following the values detected in the last time intervals ($\tau_{i-n}$, $\tau_{i-n+1}$,..., $\tau_i$),

   **characterised in that** said determining optimum values of the at least two parameters ($T_e$, A) comprises minimising the interpolation error on two or more sets of acquired values of the detected variables relating to different instants of time.

2. Method according to claim 1, wherein said minimising the interpolation error comprises fixing a first-attempt value for a first parameter ($T_e$) and subsequently calculating through an approximation method a first value (A') of a second parameter (A) that minimises the interpolation error between said equation and a preset number of pairs of detected cooking time-variable values ($\tau_{i-n}$, $\tau_{i-n+1}$,..., $\tau_i$; $T_{i-n}$, $T_{i-n+1}$,..., $T_i$) of a first set.

3. Method according to claim 2, wherein said minimising the interpolation error further comprises calculating through an approximation method a second value (A") of the second parameter (A) that minimises the interpolation error between said equation and a preset number of pairs of detected cooking time-variable values ($\tau_{j-n}$, $\tau_{j-n+1}$,..., $\tau_j$; $T_j$-n, $T_{j-n+1}$,..., $T_j$) of a second set that is different from the first set of detected cooking time-variable values ($\tau_{i-n}$, $\tau_{i-n+1}$,..., $\tau_i$; $T_{i-n}$, $T_{i-n+1}$,..., $T_i$).

4. Method according to claim 3, comprising comparing the first value (A') with the second value (A") of the second parameter (A) and verifying whether the difference is less than an approximation error ($E_A$).

5. Method according to claim 4, comprising repeating said calculating and said comparing the second parameters (A', A") until a difference is obtained that is less than the approximation error ($E_A$).

6. Method according to claim 5, wherein said repeating is obtained by increasing or decreasing the first parameter ($T_e$) by a discrete amount ($\Delta T_e$).

7. Method according to claim 6, comprising extrapolating pairs of detected cooking time-variable values ($\tau_{i+1}$, $\tau_{i+2}$,..., $\tau_{i+m}$; $T_{i+1}$, $T_{i+2}$,..., $T_{i+m}$) in instants of time subsequent to said detecting.

8. Method according to claim 7, wherein said extrapolating continues until an instant of time ($\tau_f$) is found corresponding to a target value ($T_f$) of said cooking variable (T), said instant of time ($\tau_f$) being the final cooking time of the food product, or the final time of the current cooking step.

9. Method according to any preceding claim, wherein said cooking variable (T) is a temperature inside the food product, in particular, a core temperature, i.e. the temperature at the thermal centre of the food product.

10. Method according to any preceding claim, wherein said interpolation equation comprises an exponential function.

11. Method according to claim 10, wherein said interpolation equation is:

$$T = T_e - (T_e - T_o) * e \wedge (-\tau / A),$$

where $T_e$ and A are parameters to be determined, $T_o$ is the initial temperature of the food product being cooked, T is the internal temperature of the food product and $\tau$ is the time.

12. Method according to any one of claims 9 to 11, wherein said cooking variable (T) is obtained by measuring the temperature directly.

13. Method according to any preceding claim, comprising determining the category of the food product, the load level of the cooking apparatus and/or the type of cooking on the basis of the values detected for said at least two parameters ($T_e$, A).

14. Apparatus for cooking a food product comprising a cooking chamber suitable for containing the food product to be cooked, probe means suitable for detecting values ($T_i$) of a variable (T) that represents a degree of cooking of the food product, a calculating unit suitable for storing the values of the cooking variables ($T_{i-n}$, $T_{i-n+1}$,..., $T_i$) detected at preset time intervals ($\tau_{i-n}$, $\tau_{i-n+1}$,..., $\tau_i$) and suitable for extrapolating the trend of the values of the cooking variables ($T_{i+1}$, ..., $T_{i+m}$) through an interpolation equation having at least two parameters ($T_e$, A), **characterised in that** said calculating unit determines optimum values of the at least two parameters ($T_e$, A) minimising the interpolation error on two or more sets of acquired values relating to different instants of time.

15. Apparatus according to claim 14, wherein said interpolation equation comprises an exponential function.

16. Apparatus according to claim 14 or 15, wherein said interpolation equation is:

$$T = T_e - (T_e - T_o) * e \wedge (-\tau / A),$$

where $T_e$ and A are parameters to be determined, and $T_o$ is the initial temperature of the food product being cooked, T is the internal temperature of the food product and $\tau$ is the time.

17. Apparatus according to any one of claims 14 to 16, wherein said probe means suitable for detecting values ($T_i$) of a variable (T) is probe means for measuring a temperature inside the food product, in particular, a core temperature, i.e. the temperature at the thermal centre of the food product.

18. Apparatus according to any one of claims 14 to 17, wherein said probe means measures the temperature directly.

19. Apparatus according to claim 14 or 15, wherein said probe means measures electric impedance internally of the food product.

**20.** Data-processing product loadable in the memory of an electronic computer and comprising portions of software code for implementing the method according to any one of claims 1 to 13, when said product is run in a calculating unit.

**21.** Data carrier comprising portions of software code for implementing the method according to any one of claims 1 to 13.

**22.** Apparatus according to any one of claims 14 to 19, wherein in said electronic computer an information technology product is loaded according to claim 20 arranged for controlling said apparatus.

Fig. 1

Fig. 2

Fig. 3

Fig. 4

Fig. 5

Values $\tau_i$ and $T_i$ are
acquired and stored

Temperature time values i-10
to i-1 are considered

Data

$T_e$ is set at as last calculated

Value A' is calculated that minimises
the interpolation error on points i-10
to i-1

Temperature time values i-9 to
i are considered

Data

$T_e$ is increased by $\triangle T_e$

No

Value A" is calculated that minimises
the interpolation error on points i-9
to i

$T_e$ is decreased
by $\triangle T_e$

IA"-A'I < $E_A$?

No

A">A'+$E_A$?

Yes

Yes

The latest values of A and $T_e$
are used to estrapolate the time value
$\tau_f$ at which the final cooking
temperature $T_f$ is reached.

Residual time ($\tau_i - \tau_f$) up to
the end of cooking is calculated

i is increased

Fig. 6

))) **European Patent**
**Office**

**EUROPEAN SEARCH REPORT**

**Application Number**

EP 07 00 5448

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 196 09 116 A1 (ELOMA GMBH [DE]) 18 September 1997 (1997-09-18) * abstract * * page 2, line 33 - page 3, line 54; figure * ----- | 1-20 | INV. G05D23/19 |
| A | EP 0 563 698 A2 (ZELTRON SPA [IT]) 6 October 1993 (1993-10-06) * abstract * * column 3, line 29 - column 4, line 58; figures 1,2 * ----- | 1,14 | |

TECHNICAL FIELDS
SEARCHED      (IPC)

G05D

The present search report has been drawn up for all claims

| Place of search | Date of completion of the search | Examiner |
|---|---|---|
| Munich | 27 June 2007 | Helot, Henri |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

........................................................................

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 07 00 5448

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2007

| Patent document cited in search report | | Publication date | Patent family member(s) | | Publication date |
|---|---|---|---|---|---|
| DE 19609116 | A1 | 18-09-1997 | NONE | | |
| EP 0563698 | A2 | 06-10-1993 | DE | 69307371 D1 | 27-02-1997 |
| | | | DE | 69307371 T2 | 31-07-1997 |
| | | | IT | 1258067 B | 20-02-1996 |
| | | | US | 5361681 A | 08-11-1994 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9848679 A
- WO 2004062372 A